# EUROPÄISCHE PATENTSCHRIFT

(11) **EP 0 581 017 B1**
(45) Veröffentlichungstag und Bekanntmachung des Hinweises auf die Patenterteilung: **11.03.1998**
(21) Anmeldenummer: 93110090.3
(22) Anmeldetag: 24.06.1993
(51) Int. Cl.: G01F 1/58

(54) **Durchflussmessgerät für strömende Medien**
Flow meter for fluids
Débitmètre pour des fluides en écoulement

(30) Priorität: 24.07.1992 NL 9201342
(43) Veröffentlichungstag der Anmeldung: 02.02.1994
(73) Patentinhaber: Krohne AG, 4019 Basel (CH)
(72) Erfinder: Heijnsdijk, A. M., NL-3356 BW Papendrecht (NL); Pereira, A. P., NL-3263 EE Oud-Beerland (NL); de Roo, W., NL-3361 Sliedrecht (NL); Verboom, D., NL-2971 AM Bleskensgraaf (NL)
(74) Vertreter: Gesthuysen, Hans Dieter, Dipl.-Ing.

(56) Entgegenhaltungen:
- EP-A- 0 036 513
- US-A- 3 213 685
- US-A- 4 253 340
- PATENT ABSTRACTS OF JAPAN vol. 8, no. 269 (P-319)(1706) 8 December 1984 & JP-A-59 137 822 (YAMATAKE HONEYWELL K.K.) 8 August 1984
- JAPANESE PATENTS ABSTRACTS (UNEXAMINED) Week 9205, Derwent Publications Ltd., London, GB; AN 92-035177 & JP-A-3 276 023 (YOKOGAWA) 6 December 1991

## Beschreibung

Die Erfindung betrifft ein Durchflußmeßgerät für strömende Medien, insbesondere ein Volumendurchflußmeßgerät, nach dem Oberbegrift des Patentanspruchs 1.

Es ist bekannt, das Meßrohr von Durchflußmeßgeräten, beispielsweise von magnetisch-induktiven Meßgeräten oder von auf der Basis von Ultraschall arbeitenden Durchflußmeßgeräten, an der Innenseite mit einer Auskleidung zu versehen, um dadurch einerseits die Elektroden elektrisch gegenüber dem Meßrohr zu isolieren, andererseits das Meßrohr vor Schäden durch das Fluid zu schützen, insbesondere vor Korrosions- und/oder Temperaturschäden. Bei magnetisch-induktiven Durchflußmeßgeräten mit einem metallischem Meßrohr ist eine isolierende Auskleidung, elektrische Isolation der Elektroden gegenüber dem metallischen Meßrohr, unverzichtbar.

Das Versehen der Innenseite eines beispielsweise metallischen Meßrohres mit einer Auskleidung wirft verschiedene Probleme auf. Die Auskleidung, die meistens aus Kunststoff besteht, haftet oft nicht hinreichend gut am Meßrohr. Beispielsweise führen unterschiedliche Temperaturausdehnungskoeffizienten des Meßrohres einerseits und der Auskleidung andererseits dazu, daß sich die Auskleidung vom Meßrohr ablösen kann. Auch kann ein in dem Meßrohr auftretender Unterdruck, beispielsweise durch das plötzliche Schließen eines Ventils, zu einem Ablösen der Auskleidung vom Meßrohr führen. Das Ablösen der Auskleidung vom Meßrohr beeinflußt einerseits die Lebensdauer des entsprechenden Durchflußmeßgerätes, andererseits auch die Meßgenauigkeit, da eine ganz oder teilweise abgelöste Auskleidung den Innendurchmesser des Meßrohres verringert und im übrigen Turbulenzen verursachen kann.

Zum Stand der Technik gehören Durchflußmeßgeräte der in Rede stehenden Art, bei denen zur guten Befestigung der Auskleidung an der Innenseite des Meßrohres Schwalbenschwanzkonstruktionen und Brückenkonstruktionen verwirklicht sind. Dabei ist die Auskleidung jedoch nur stellenweise an der Innenseite des Meßrohres befestigt. Ein Ablösen der Auskleidung vom Meßrohr ist nicht zuverlässig verhindert.

Aus der japanischen Gebrauchsmusterschrift 53-51.181 ist es bekannt, bei einem Meßrohr für ein Durchflußmeßgerät in die Auskleidung ein mit Löchern versehenes Rohr einzubetten. Dieses Rohr fungiert dabei als Verstärkung, die verhindern soll, daß sich die Auskleidung von der Innenseite des Meßrohres ablöst. Das als Verstärkung der Auskleidung dienende Rohr ist etwas länger als das Meßrohr und hat einen Außendurchmesser, der etwas geringer ist als der Innendurchmesser des Meßrohres, so daß zwischen dem die Auskleidung verstärkenden Rohr und der Innenseite des Meßrohres ein Zwischenraum entsteht, der von dem Material der Auskleidung ausgefüllt wird. Das Material der Auskleidung umgibt also das der Verstärkung dienende Rohr vollständig; das der Verstärkung dienende Rohr ist also, wie bereits ausgeführt, in die Auskleidung eingebettet. Das der Verstärkung der Auskleidung dienende Rohr ist mit einer großen Anzahl von Löchern versehen, die jeweils in etwa einen Durchmesser haben, der der Wandstärke des Rohres entspricht.

Die zuvor beschriebene Konstruktion hat zunächst den Nachteil, daß relativ viel Material für die Auskleidung eingebracht werden muß, um das der Verstärkung dienende Rohr vollständig zu umgeben. Im übrigen besteht in den Bereichen zwischen den Löchern die Gefahr, daß sich die Auskleidung von dem der Verstärkung dienenden Rohr ablöst.

In der japanischen Gebrauchsmusterschrift 53-51.181 ist außerdem vorgeschlagen, für die Verstärkung der Auskleidung - statt eines mit Löchern versehenen Rohres - ein im einzelnen nicht beschriebenes Netz zu verwenden. Ein solches Netz hat jedoch den Nachteil, daß es konstruktiv wenig dazu geeignet ist, die zur Verstärkung der Auskleidung notwendigen Kräfte aufzunehmen. Insbesondere ist es bei einem starken Unterdruck im Meßrohr möglich, daß sich die Auskleidung zusammen mit dem der Verstärkung dienenden Netz von der Innenseite des Meßrohres ablöst.

In der europäischen Patentschrift 0 036 513 ist ein Meßrohr der hier grundsätzlich in Rede stehenden Art beschrieben, bei dem zur Verstärkung der Auskleidung in die Auskleidung ein Metallgewebe eingebettet ist. Bei einer derart verstärkten Auskleidung besteht jedoch ebenfalls die Gefahr der Ablösung der Auskleidung von der Innenseite des Meßrohres, insbesondere dann, wenn in dem Meßrohr ein Unterdruck entsteht.

Die europäische Patentschrift offenbart in Verbindung mit der zuletzt beschriebenen Konstruktion auch, das Metallgewebe punktuell mit der Innenseite des Meßrohres zu verbinden. Um damit das Ablösen der Auskleidung von der Innenseite des Meßrohres zu verhindern, muß eine sehr große Anzahl solcher punktueller Verbindungen verwirklicht werden. Das erfordert eine große Anzahl von Bearbeitungsschritten. Im übrigen ist die Auskleidung mit Hilfe der Maschen des Metallgewebes nur indirekt und zwischen den sich in relativ großen gegenseitigen Abständen befindenden Maschen überhaupt nicht an der Innenseite des Meßrohres befestigt. An den Punkten, an denen das Metallgewebe an der Innenseite des Meßrohres befestigt ist, kann es nicht vollständig von dem Material der Auskleidung umschlossen werden, wodurch die Haftung zwischen der Auskleidung und dem der Verstärkung dienenden Metallgewebe nur unvollständig gewährleistet werden kann. Durch die nur punktuell mit der Innenseite des Meßrohres verbundenen Maschen des Metallgewebes entsteht ein relativ geringer Innendurchmesser der Auskleidung, so daß eine relativ große Menge von Material für die Auskleidung benötigt wird, um das Metallgewebe darin vollständig einzubetten.

Aus der JP - A - 03 276 023 ist ein gattungsgemäßes Durchflußmeßgerät bekannt. Dieses Durchflußmeßgerät weist ein aus Keramik bestehendes Meßrohr auf. Um durch Temperaturänderungen auftretende Spannungen absorbieren zu können, ist an der Innenseite des Meßrohres eine poröse Schicht vorgesehen, die mit einer Auskleidung vollständig imprägniert ist.

Aus der JP - A - 59 137 822 ist es bekannt, bei einem Meßrohr für ein Durchflußmeßgerät in die Auskleidung ein mit Löchern versehenes Rohr einzubetten. Dieses Rohr fungiert dabei als Verstärkung, die verhindern soll, daß sich die Auskleidung von der Innenseite des Meßrohres ablöst. Die Verwendung eines separaten Meßrohrs und einer separaten Verstärkung bietet sich aus herstellungstechnischen Gründen an. Das Material der Auskleidung umgibt das der Verstärkung dienende Rohr vollständig.

Aus der US - A - 3,213,685 ist bereits ein Durchflußmeßgerät bekannt, bei dem als Verstärkungselement ein Draht verwendet wird, der ebenfalls vollständig in die Auskleidung eingebettet ist.

Der Erfindung liegt nun die Aufgabe zugrunde, bei einem Durchflußmeßgerät der in Rede stehenden Art bzw. bei dem Meßrohr eines solchen Durchflußmeßgerätes die Verbindung der Auskleidung mit der Innenseite des Meßrohres zu verbessern, und zwar insbesondere so, daß einerseits der Einfluß der Temperatur, des Drucks und der Zeit auf den effektiven Innendurchmesser des Meßrohres reduziert wird, daß andererseits mit relativ wenig Material für die Auskleidung gearbeitet werden kann.

Das erfindungsgemäße Durchflußmeßgerät, bei dem die zuvor aufgezeigte Aufgabe gelöst ist, ist nun dadurch gekennzeichnet, daß das Material der Auskleidung lediglich auf die Innenseite der Verstärkung aufgebracht ist und im Bereich der Verstärkung nicht bis an die Innenseite des Meßrohres gelangt. Dadurch, daß erfindungsgemäß die Verstärkung aus einem porösen oder körnigen Material besteht, sind eine große Anzahl von sehr dicht beieinander liegenden Befestigungspunkten gegeben, da das Material der Auskleidung in die Poren der Verstärkung eindringen und so an der Verstärkung haften kann. Erfindungsgemäß ist festgestellt worden, daß es in Verbindung mit einer porösen Verstärkung nicht notwendig ist, die Verstärkung vollständig mit dem Material der Auskleidung zu tränken bzw. die Verstärkung vollständig in die Auskleidung einzubetten. Es ist lediglich erforderlich, daß das Material der Auskleidung, das beispielsweise durch Spritzen, Gießen oder Impräg-nieren aufgetragen wird, ausreichend weit in die Poren der Verstärkung eindringt, damit eine gute Haftung zwischen der Auskleidung und der aus einem porösem Material bestehenden Verstärkung eintritt. Hierdurch kann letztlich mit relativ wenig Material für die Auskleidung gearbeitet werden.

Es gibt nun eine Vielzahl von Möglichkeiten, das erfindungsgemäße Durchflußmeßgerät auszugestalten und weiterzubilden, wozu auf die dem Patentanspruch 1 nachgeordneten Patentansprüche verwiesen wird. Weitere Anwendungsmöglichkeiten, Ziele, Merkmale und Vorteile der vorliegenden Erfindung ergeben sich aus der nachfolgenden Beschreibung von Ausführungsbeispielen anhand der Zeichnung und aus der Zeichnung selbst.

In der Zeichnung zeigen
- Fig. 1: einen Längsschnitt durch eine erste Ausführungsform eines Meßrohres eines erfindungsgemäßen Durchflußmeßgerätes bzw. eines erfindungsgemäßen Meßrohres,
- Fig. 2: einen Längsschnitt durch einen Teil eines Meßrohres eines erfindungsgemäßen Durchflußmeßgerätes bzw. eines erfindungsgemäßen Meßrohres, zweite Ausführungsform,
- Fig. 3: einen Längsschnitt durch einen Teil eines Meßrohres eines erfindungsgemäßen Durchflußmeßgerätes bzw. eines erfindungsgemäßen Meßrohres, dritte Ausführungsform,
- Fig. 4: wiederum einen Längsschnitt durch einen Teil eines Meßrohres eines erfindungsgemäßen Durchflußmeßgerätes bzw. eines erfindungsgemäßen Meßrohres, vierte Ausführungsform und
- Fig. 5: einen Längsschnitt durch eine fünfte Ausführungsform eines Meßrohres eines erfindungsgemäßen Durchflußmeßgerätes bzw. eines erfindungsgemäßen Meßrohres.

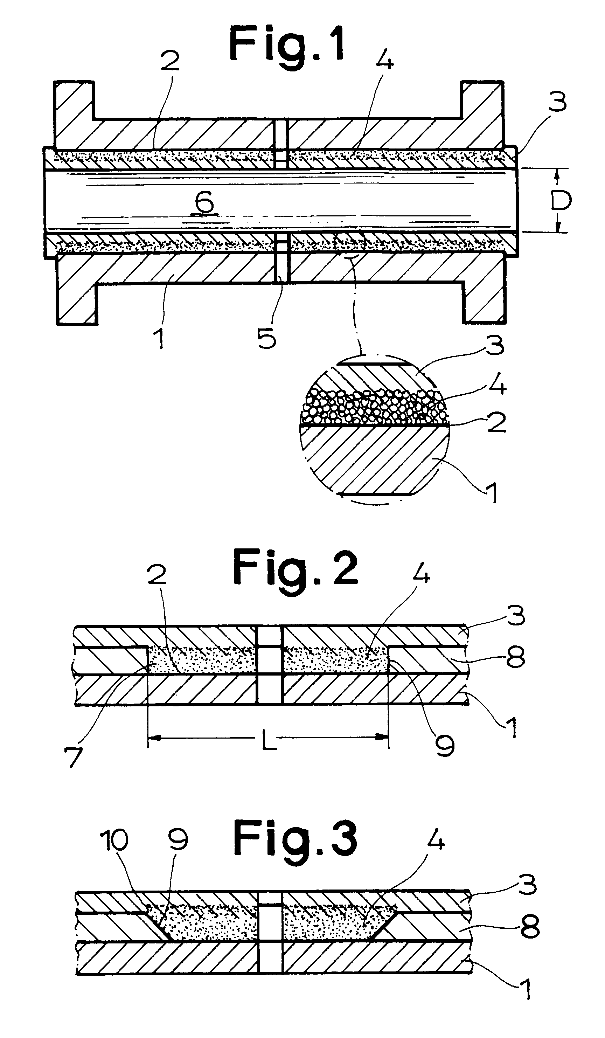

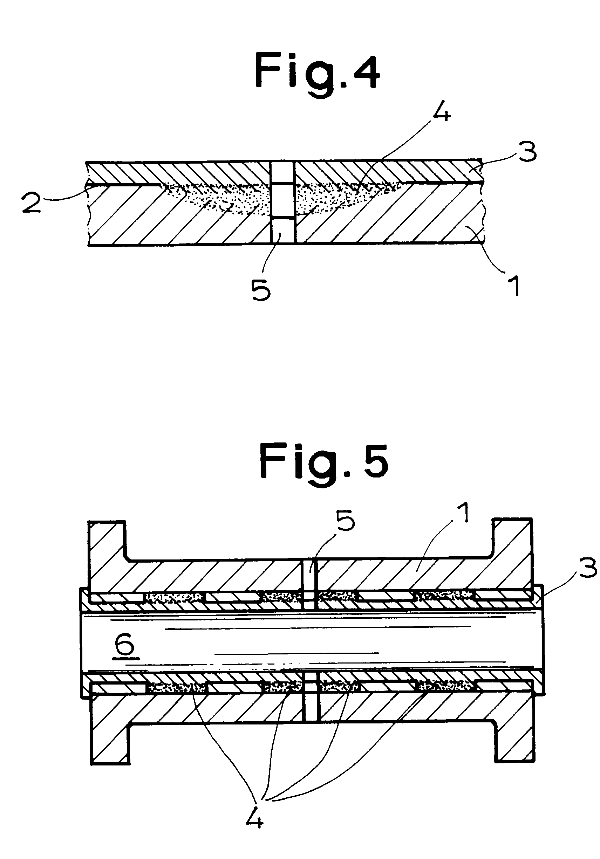

Das in den Figuren - ganz (Fig. 1 und 5) bzw. teilweise (Fig. 2, 3 und 4) - dargestellte metallische Meßrohr 1 gehört zu einem im übrigen nicht dargestellten Durchflußmeßgerät für strömende Medien, insbesondere zu einem Volumendurchflußmeßgerät; es ist an seiner Innenseite 2 mit einer Auskleidung 3 versehen. Die Auskleidung 3 weist zumindest über einen Teil ihrer Länge eine Verstärkung 4 auf. Zur Aufnahme von in den Figuren nicht dargestellten Elektroden sind im Meßrohr 1, in der Auskleidung 3 und in der Verstärkung 4, durchgehende Öffnungen 5 vorgesehen, so daß die nicht dargetellten Elektroden mit dem Innenraum 6 des Meßrohres 1 in Verbindung stehen können. Für alle in den Figuren dargestellten Ausführungsformen gilt, daß die Verstärkung 4 aus einem porösen Material besteht. Das ist in allen Figuren entsprechend angedeutet und kann dem vergrößerten Ausschnitt aus Fig. 1 besonders deutlich entnommen werden.

Bei der in Fig. 1 dargestellten Ausführungsform des erfindungsgemäßen Meßrohres 1 besteht die Verstärkung 4 aus einem biegesteifen Material; sie ist also rohrförmig ausgebildet und etwa gleich lang wie das Meßrohr 1. Die Auskleidung 3, die z. B. im Spritzgußverfahren realisiert worden ist, ragt bei der in Fig. 1 dargestellten Ausführungsform aus den Enden des Meßrohres 1 heraus, was jedoch nicht zwingend ist. Wie der vergrößerte Ausschnitt aus Fig. 1 zeigt, befindet sich das Material der Auskleidung 3 teilweise in den Poren der aus einem porösem Material bestehenden Verstärkung 4; das Material der Auskleidung 3 ist also beim Einbringen in die Poren der Verstärkung 4 eingedrungen. Hierdurch ist eine gute Haftung zwischen der Auskleidung 3 und der Verstärkung 4 über die gesamte Länge der Verstärkung 4 gewährleistet.

Wie bereits ausgeführt, besteht bei der in Fig. 1 dargestellten Ausführungsform die Verstärkung 4 aus einem biegesteifen Material. Durch die Wahl eines biegesteifen Materials ist in besonderer Weise gewährleistet, daß die Verstärkung 4 sich nicht von der Innenseite 2 des Meßrohres 1 ablösen kann, wie dies im Stand der Technik leider häufig zu beobachten ist. Im übrigen bietet eine aus einem biegesteifen porösen Material bestehende Verstärkung 4 den Vorteil, daß die Verstärkung 4 grundsätzlich nicht unbedingt an der Innenseite 2 des Meßrohres 1 festgesetzt werden muß, solange sichergestellt ist daß sich die Verstärkung 4 nicht in axialer Richtung verschieben kann.

Eine besonders geeignete Methode, eine poröse Verstärkung 4 herzustellen, besteht darin, ein homogenes Material aufzuschäumen. Dabei ist es notwendig, daß das Aufschäumen in einer Art und Weise geschieht, daß eine offenzellige Porenstruktur entsteht. Ein Beispiel für ein derartiges Material ist das bekannte "Foam Glas".

Die gewünschte Porosität für die Verstärkung 4 kann auch dadurch erreicht werden, daß das Material eine körnige Struktur aufweist. Zwischen den Körnern verbleiben dann Hohlräume, in die das Material der Auskleidung 3 eindringen kann. Selbstverständlich brauchen dabei die "Körner" nicht rund zu sein; sie können auch eine vieleckige, längliche oder unregelmäßige Form aufweisen. Die zweckmäßigen Abmessungen der "Körner" hängen von der Viskosität des Materials der Auskleidung 3 bei Verarbeitungstemperatur ab; ein geeigneter Durchmesser kann beispielsweise bei etwa 0,8 nm liegen, jedoch ohne weiteres auch kleiner oder größer sein. Eine Verstärkung 4 aus einem Material, das eine körnige Struktur aufweist, kann beispielsweise dadurch hergestellt werden, daß Metall-, Keramik- oder Glaskügelchen zu der Verstärkung 4 gesintert werden. Ein geeignetes Metall ist beispielsweise Bronze, jedoch können auch andere Metalle und Metalllegierungen verwendet werden.

Fig. 2 zeigt - nur teilweise - eine Ausführungsform eines erfindungsgemäßen Meßrohres, bei dem sich die Verstärkung 4 nur über einen Teil der Länge des Meßrohres 1 erstreckt. Das ist ausreichend, da man eine genaue Messung bereits dann erhalten kann, wenn die Länge L, über die die Auskleidung 3 mit der Verstärkung 4 versehen ist, zwischen etwa dem einfachen und dem dreifachen effektiven Innendurchmesser D des Meßrohres 1 liegt. Dabei ist der effektive Innendurchmesser D des Meßrohres 1 der Innendurchmesser D der Auskleidung 3. Für die Länge L der in Fig. 2 dargestellten Verstärkung 4 muß folglich gelten, daß diese etwa dem Einfachen bis Dreifachen, vorzugsweise dem Zweifachen effektiven Innendurchmesser D des Meßrohres 1 entspricht.

Erstreckt sich die Verstärkung 4, wie in Fig. 2 dargestellt, nur über einen Teil der Länge des Meßrohres 1, so empfiehlt sich eine Ausführung des Meßrohres 1 derart, daß die Verstärkung 4 in einem Teil mit vergrößertem Innendurchmesser angeordnet ist. Die Verstärkung 4 befindet sich dann also in einer Aussparung 7 des Meßrohres 1. Das Material der Auskleidung 3 ist also nur über die Länge L der Verstärkung 4 fest mit der Verstärkung 4 verbunden. Im einzelnen kann sich die Verstärkung 4, wie dies die Figuren 2 und 3 zeigen, zwischen in das Meßrohr 1 eingeschobenen rohrförmigen Einsatzstücken 8 befinden.

Um Spannungen zwischen der Auskleidung 3 und dem Meßrohr 1 bzw. der Innenseite des Meßrohres 1 zu vermeiden, kann es zweckmäßig sein, wie dies in Fig. 3 dargestellt ist, den Übergang vom Meßrohr 1 mit vergrößertem Innendurchmesser zum Meßrohr 1 mit normalem Innendurchmesser kontinuierlich auszuführen. Im übrigen zeigt die Fig. 3, daß die Verstärkung 4 einen geringeren Innendurchmesser aufweist als das Meßrohr 1 im Bereich der Einsatzstücke 8. Um Spannungen im Bereich der Ränder 9 der Einsatzstücke 8 zu vermeiden, sind die Einsatzstücke 8 im Bereich der Ränder 9 abgeschrägt. Eine solche Abschrägung kann auch für die Ränder 10 der Verstärkung 4 sinnvoll sein.

Bei der in Fig. 3 dargestellten Ausführungsform eines erfindungsgemäßen Meßrohres 1 ragt die Verstärkung 4 über den Innendurchmesser der Einsatzstücke 8 hinaus. Im Bereich der Verstärkung 4 weist also die Auskleidung 3 eine geringere Dicke auf als in den übrigen Bereichen; der Innendurchmesser D der Auskleidung 3, also der effektive Innendurchmesser D, ist ja über die gesamte Länge des Meßrohres 1 konstant.

Wie bereits ausgeführt, ist es bei dem erfindungsgemäßen Meßrohr 1 nicht erforderlich, die Verstärkung 4 vollständig in die Auskleidung 3 einzubetten. Dargestellt ist vielmehr, daß die Verstärkung 4 mit der Innenseite 2 des Meßrohres 1 in Kontakt steht. Insbesondere kann die Verstärkung 4 fest mit dem Meßrohr 1 verbunden sein. Eine Möglichkeit der Fixierung der Verstärkung 4 mit dem Meßrohr 1 besteht darin, die Verstärkung 4 und die Innenseite 2 des Meßrohres 1 so auszuführen, daß die Verstärkung 4 und das Meßrohr 1 ineinander übergehen, wie dies in Fig. 4 dargestellt ist. Dies ist beispielsweise dadurch möglich, daß man die Verstärkung 4 und das Meßrohr 1 durch Sintern miteinander verbindet.

In Fig. 5 ist eine Ausführungsform eines erfindungsgemäßen Meßrohres 1 dargestellt, bei der die Auskleidung 3 nur an verschiedenen Stellungen mit Verstärkungen 4 versehen ist. Das kann z. B. dann sinnvoll sein, wenn mehrere Paare von Elektroden über die Länge des Meßrohres 1 vorgesehen werden sollen.

Wie bereits ausgeführt, wird die Auskleidung 3 vorzugsweise im Spritzgußverfahren hergestellt. Dadurch wird gewährleistet, daß das Material der Auskleidung 3 in die Poren der Verstärkung 4 eindringt. Die beim Spritzgußverfahren anzuwendenden Drücke und Temperaturen hängen stark von dem verwendeten Material für die Auskleidung 3 und von der Größe der Poren in der Verstärkung 4 ab.

Handelt es sich bei dem erfindungsgemäßen Durchflußmeßgerät um ein magnetischinduktives, so besteht die Auskleidung 3 in der Regel aus Kunststoff. Das ermöglicht ohne weiteres die notwendige Isolierung der nicht dargestellten Elektroden gegenüber dem Meßrohr 1.

Schließlich kann es bei besonderen Anforderungen an die Belastbarkeit der Auskleidung 3 zweckmäßig sein, diese mit mindestens zwei konzentrischen Lagen der Verstärkung 4 zu versehen.

## Patentansprüche

1. Durchflußmeßgerät für strömende Medien, insbesondere Volumendurchflußmeßgerät, mit einem an seiner Innenseite (2) mit einer Auskleidung (3) versehenen Meßrohr (1), wobei die Auskleidung (3) zumindest über einen Teil ihrer Länge eine Verstärkung (4) aufweist, wobei die Verstärkung (4) aus einem porösem Material besteht und mit der Innenseite (2) des Meßrohres (1) in Kontakt steht, **dadurch gekennzeichnet**, daß das Material der Auskleidung (3) lediglich auf der Innenseite (2) der Verstärkung (4) aufgebracht ist und im Bereich der Verstärkung (4) nicht bis an die Innenseite (2) des Meßrohres (1) gelangt.

2. Durchflußmeßgerät nach Anspruch 1, dadurch gekennzeichnet, daß die Verstärkung (4) aus einem biegesteifen Material besteht.

3. Durchflußmeßgerät nach Anspruch 1 oder 2, dadurch gekennzeichnet, daß das Material der Verstärkung (4) eine geschäumte oder körnige Struktur aufweist.

4. Durchflußmeßgerät nach Anspruch 3, dadurch gekennzeichnet, daß das Material der Verstärkung (4) aus gesinterten Metall-, Keramik- oder Glaskügelchen besteht.

5. Durchflußmeßgerät nach einem der Ansprüche 1 bis 4, dadurch gekennzeichnet, daß die Auskleidung (3) nur über einen Teil ihrer Länge mit der Verstärkung (4) verbunden ist.

6. Durchflußmeßgerät nach einem der Ansprüche 1 bis 5, dadurch gekennzeichnet, daß die Länge (L) der Verstärkung (4) mindestens dem effektiven Innendurchmesser (D) des Meßrohres (1) entspricht.

7. Durchflußmeßgerät nach einem der Ansprüche 1 bis 6, dadurch gekennzeichnet, daß die Länge (L) der Verstärkung (4) das Dreifache des effektiven Innendurchmessers (D) des Meßrohres (1) nicht übersteigt.

8. Durchflußmeßgerät nach einem der Ansprüche 1 bis 7, dadurch gekennzeichnet, daß die Verstärkung (4) in einem Teil des Meßrohres (1) mit vergrößertem Innendurchmesser (D) angeordnet ist.

9. Durchflußmeßgerät nach Anspruch 8, dadurch gekennzeichnet, daß der Übergang vom Meßrohr (1) mit vergrößertem Innendurchmesser (D) zum Meßrohr (1) mit einfachem Innendurchmesser (D) kontinuierlich erfolgt.

10. Durchflußmeßgerät nach einem der Ansprüche 5 bis 9, dadurch gekennzeichnet, daß die Auskleidung (3) im Bereich der Verstärkung (4) eine geringere Dicke als im übrigen Bereich bzw. als in den übrigen Bereichen aufweist.

11. Durchflußmeßgerät nach einem der Ansprüche 1 bis 10, dadurch gekennzeichnet, daß die Verstärkung (4) und das Meßrohr (1) ineinander übergehen.

12. Durchflußmeßgerät nach einem der Anspruche 1 bis 10, dadurch gekennzeichnet, daß die Verstärkung (4) mit dem Meßrohr (1) fest verbunden ist.

13. Durchflußmeßgerät nach einem der Ansprüche 5 bis 12, dadurch gekennzeichnet, daß die Auskleidung (3) in mindestens zwei Abschnitten mit der Verstärkung (4) verbunden ist.

14. Durchflußmeßgerät nach einem der Ansprüche 1 bis 13, dadurch gekennzeichnet, daß die Auskleidung (3) im Spritzgußverfahren hergestellt ist.

15. Durchflußmeßgerät nach einem der Ansprüche 1 bis 14, dadurch gekennzeichnet, daß die Auskleidung (3) aus Kunststoff besteht.

16. Durchflußmeßgerät nach einem der Ansprüche 1 bis 15, dadurch gekennzeichnet, daß die Auskleidung (3) mit mindestens zwei konzentrischen Lagen der Verstärkung (4) versehen ist.

## Claims

1. A flow measuring device for flowing media, particularly a volume flow rate measuring device, having a measuring tube (1) provided with a lining (3) on its inside (2), wherein the lining (3) comprises a reinforcement (4) over at least part of its length, wherein the reinforcement (4) consists of a porous material and is in contact with the inside (2) of the measuring tube (1), **characterised in that** the material of the lining (3) is merely deposited on the inside (2) of the reinforcement (4) and in the region of the reinforcement (4) does not reach as far as the inside (2) of the measuring tube (1).

2. A flow measuring device according to claim 1, characterised in that the reinforcement (4) consists of a deflection-resistant material.

3. A flow measuring device according to claim 1 or 2, characterised in that the material of the reinforcement (4) has a foamed or granular structure.

4. A flow measuring device according to claim 3, characterised in that the material of the reinforcement (4) consists of sintered metal-, ceramic- or glass beads.

5. A flow measuring device according to any one of claims 1 to 4, characterised in that the lining (3) is only attached over part of its length to the reinforcement (4).

6. A flow measuring device according to any one of claims 1 to 5, characterised in that the length (L) of the reinforcement (4) corresponds at least to the effective inside diameter (D) of the measuring tube (1).

7. A flow measuring device according to any one of claims 1 to 6, characterised in that the length (L) of the reinforcement (4) does not exceed three times the effective inside diameter (D) of the measuring tube (1).

8. A flow measuring device according to any one of claims 1 to 7, characterised in that the reinforcement (4) is disposed in a part of the measuring tube (1) which has an enlarged inside diameter (D).

9. A flow measuring device according to claim 8, characterised in that the transition from the measuring tube (1) with the enlarged inside diameter (D) to the measuring tube (1) with the single inside diameter (D) is continuous.

10. A flow measuring device according to any one of claims 5 to 9, characterised in that the lining (3) is of lesser thickness in the region of the reinforcement (4) than it is in the remaining region or in the remaining regions.

11. A flow measuring device according to any one of claims 1 to 10, characterised in that the reinforcement (4) and the measuring tube (1) extend into one another.

12. A flow measuring device according to any one of claims 1 to 10, characterised in that the reinforcement (4) is fixedly attached to the measuring tube (1).

13. A flow measuring device according to any one of claims 5 to 12, characterised in that the lining (3) is attached in at least two sections to the reinforcement (4).

14. A flow measuring device according to any one of claims 1 to 13, characterised in that the lining (3) is produced by an injection moulding process.

15. A flow measuring device according to any one of claims 1 to 14, characterised in that the lining (3) consists of synthetic material.

16. A flow measuring device according to any one of claims 1 to 15, characterised in that the lining (3) is provided with at least two concentric layers of the reinforcement (4).

## Revendications

1. Débitmètre pour des milieux qui s'écoulent, en particulier débitmètre volumique comprenant un tube de mesure (1) muni, sur son côté interne (2), d'un revêtement (3), dans lequel le revêtement (3) présente au moins, sur une partie de sa longueur, un renforcement (4), le renforcement (4) étant constitué d'une matière poreuse et se trouvant en contact avec le côté interne (2) du tube de mesure (1), caractérisé en ce que la matière du revêtement (3) est appliquée uniquement sur le côté interne (2) du renforcement (4) et, dans la zone du renforcement (4), n'aboutit pas au côté interne (2) du tube de mesure (1).

2. Débitmètre selon la revendication 1, caractérisé en ce que le renforcement (4) est constitué d'une matière résistant à la flexion.

3. Débitmètre selon la revendication 1 ou 2, caractérisé en ce que la matière du renforcement (4) présente une structure en mousse ou granulaire.

4. Débitmètre selon la revendication 3, caractérisé en ce que la matière du renforcement (4) est constituée de petites billes frittées en métal, en céramique ou en verre.

5. Débitmètre selon l'une quelconque des revendications 1 à 4, caractérisé en ce que le revêtement (3) est relié au renforcement (4) seulement sur une partie de sa longueur.

6. Débitmètre selon l'une quelconque des revendications 1 à 5, caractérisé en ce que la longueur L du renforcement (4) correspond au moins au diamètre interne effectif (D) du tube de mesure (1).

7. Débitmètre selon l'une quelconque des revendications 1 à 6, caractérisé en ce que la longueur L du renforcement (4) ne dépasse pas le triple du diamètre interne effectif (D) du tube de mesure (1).

8. Débitmètre selon l'une quelconque des revendications 1 à 7, caractérisé en ce que le renforcement (4) est disposé dans une partie du tube de mesure (1) dont le diamètre interne (D) est agrandi.

9. Débitmètre selon la revendication 8, caractérisé en ce que la transition du tube de mesure (1) à diamètre interne (D) agrandi au tube de mesure (1) à diamètre interne (D) simple s'effectue en continu.

10. Débitmètre selon l'une quelconque des revendications 5 à 9, caractérisé en ce que le revêtement (3), dans la zone du renforcement (4), présente une épaisseur inférieure à celle en vigueur dans la zone, respectivement dans les zones restantes.

11. Débitmètre selon l'une quelconque des revendications 1 à 10, caractérisé en ce que le renforcement (4) et le tube de mesure (1) se confondent.

12. Débitmètre selon l'une quelconque des revendications 1 à 10, caractérisé en ce que le renforcement (4) est relié à demeure au tube de mesure (1).

13. Débitmètre selon l'une quelconque des revendications 5 à 12, caractérisé en ce que le revêtement (3) est relié au renforcement (4) dans au moins deux sections.

14. Débitmètre selon l'une quelconque des revendications 2 à 13, caractérisé en ce que le revêtement (3) est fabriqué via un procédé de moulage par injection.

15. Débitmètre selon l'une quelconque des revendications 1 à 14, caractérisé en ce que le revêtement (3) est constitué d'une matière synthétique.

16. Débitmètre selon l'une quelconque des revendications 1 à 15, caractérisé en ce que le revêtement (3) est muni d'au moins deux couches concentriques du renforcement (4).
